# EUROPEAN PATENT APPLICATION

(11) **EP 1 388 282 A2**
(43) Date of publication of application: **11.02.2004**
(21) Application number: 03380187.9
(22) Date of filing: 01.08.2003
(51) Int. Cl.: A01K 63/02

(54) **Live tank for transporting shellfish**

(30) Priority: 02.08.2002 ES 200201832
(71) Applicant: Gonzalez y David, Mar, 28925 Alcorcon (Madrid) (ES)
(72) Inventor: Gonzalez y David, Mar, 28925 Alcorcon (Madrid) (ES)
(74) Representative: Davila Baz, Angel

(57) **Abstract**

A live tank for transporting shellfish comprising a shellfish recipient which can be filled with water, a filtering system, at least one water circulation pump and water circulation conduits, shaped for pumping the water between the inside of the recipient and the filtering system, in which the circulation conduits comprise a plurality of water inlet and outlet nozzles (4, 21) distributed through the inside of the recipient for causing turbulences favoring the stirring of the water, and in that all the elements composing the live tank are arranged in a compact unit which can be easily transported.

## Description

### Field of the invention

The invention is included in the field of live tanks (also called live wells) for transporting shellfish, particularly in the field of compact live tanks.

### State of the Art/Background of the invention

Due to how easily shellfish can degrade and lose quality, or even cease to be suitable for human consumption, shellfish vendors are normally required to have the shellfish reach the consumer alive, just before being prepared for consumption.

As a result, live tanks or live wells have been known for some time in restaurants or in sales establishments where the purchaser can verify that the shellfish he/she is purchasing is alive, and therefore with quality assurance. These live tanks consist of a recipient with salt water, and they frequently have a cover or one or several walls of glass so that the shellfish can be seen and frequently chosen by means of the appearance.

The manner of conserving the shellfish alive consists of having a large amount of salt water to shellfish amount ratio; although this amount can vary, depending on the species, in the known live tanks, it is a high ratio.

To improve conservation of the water and to not have to frequently replace it, filtering, water cooling, oxygenation and other systems, such as water cooling, can be added.

However, the majority of these live tanks have filtering systems arranged separately from the water recipient, therefore they are not compact. Furthermore, they are built with weak materials. And especially, due to the large amount of water they must carry, they have a lot of "useless" weight per Kg of shellfish conserved therein. This causes them not to be used for transporting shellfish, but rather they are statically arranged in the place of consumption.

Several solutions are known for transporting shellfish: the simplest solution is to transport them in moistened recipients or recipients at a low temperature. Another possibility is to transport them in pool-trucks, rather unsuitable if the amount of shellfish to be transported is not very large. Furthermore, in these conditions it is not easy to arrange filtering means, and at best oxygen is injected. This causes a very high mortality, but even still it is more cost-effective than transporting the shellfish accompanied by such a large amount of water as that which is necessary to keep it alive.

### Description of the invention

An object of the present invention is a live tank for transporting shellfish overcoming the previous drawbacks, providing a compact live tank which keeps the shellfish alive with a smaller amount of water than the known live tanks, which therefore allows transporting the shellfish at an acceptable cost and without losses due to mortality during transport.

To do this, the ratio between the weight of the water necessary to keep the shellfish alive and the weight of the shellfish is reduced. This achieves improving the cleanliness of the water, preventing the concentration of contaminants from increasing in spite of there being a smaller amount of water per Kg of shellfish.

Thus, the invention consists of a live tank for transporting shellfish comprising a shellfish recipient which can be filled with water, a filtering system, at least one water circulation pump and a plurality of circulation conduits.

It can further include water treatment accessories which can be cooling or heating means, means for adding oxygen, sensors or other elements known for treating the water of shellfish live tanks.

The circulation conduits comprise a plurality of water inlet and outlet nozzles distributed throughout the recipient such that they cause turbulences favoring the stirring of the water. Also understood by nozzle is a simple hole through which the water flows out of a conduit. This stirring of the water is what allows significantly reducing the amount of water per Kg of shellfish, allowing transporting the shellfish in this live tank in a cost-effective manner, and keeping the majority of the shellfish alive.

Increasing the number of filtering cycles (for example, increasing the power of the pump or the number of pumps) improves the average conditions of the level of contaminants in the live tank. This is an advantage also provided by the invention. However, causing turbulences with the movement of the water, stirring it, makes these average conditions exist in all of the water in the live tank, preventing the existence of areas where contamination is concentrated (corners and areas far from the water connections of the filtering system). This prevents the concentration of contaminants at any point of the water recipient from being high, keeping the shellfish in good conditions.

Increasing the stirring and mixing the water is considered increasing the turbulences in the water and stirring it more than in known live tanks (where there are practically no turbulences, as the water moves through the live tank following a path with defined current lines). In the invention, arranging a plurality of water inlet and outlet nozzles creates numerous currents which mix together, causing the turbulences and stirring of the water in the recipient.

Another feature is that all the elements composing the live tank are arranged in a compact unit that can be moved by means of normal maintenance means in retail sales establishments, such as a hand pallet fork.

Some known live tanks can also be transported, but by using means which are not normal in a retail-type sales establishment. To move conventional live tanks, a crane may be necessary because of its weight, or it may be necessary to take important precautions so as to prevent any damages, or to move it when it is empty, or perhaps to move the water recipient on one side and the filtering means on the other. This causes them not to be moved frequently.

According to the specific embodiment disclosed in the patent application from which priority is claimed, the filtering system comprises a plurality of filters vertically and horizontally arranged inside of the water recipient, the filters acting as supports where the containers with the live shellfish are placed. Then the combination of the plurality of water inlet and outlet nozzles making the water circulate in all directions through the recipient, passing through these filters, causes the concentration of contaminants to be lower than in a conventional live tank, where the water follows a linear path in which the filters and other water treatment accessories, such as a cooler or heater, are along, inserted in series. In this case, the live tank has what in the first patent application was called a deposit, arranged on the lower part but, for a person skilled in live tanks, it is evident that it is a second filter system where the particles removed from the water are deposited.

A second embodiment example according to the invention is a live tank for transporting shellfish comprising at least two water circuits of the filtering system or water treatment accessory circuits connected in parallel with the water recipient. Water treatment accessories can be water cooling systems, water heating systems or other systems known in the sector of shellfish live tanks, and which can comprise water circuits other than those of the filtering systems.

Since there are at least parallel two circuits, it is convenient for there to be two water circulation pumps, although this is not a necessary condition.

This can be specified more by defining a filtering system comprising a biological filter and a mechanical-chemical filter and optionally a urea filter, of the type known on the market. A water treatment accessory, which is a water cooler, can also be specified.

Then a set of parallel circuits can be designed which improve the stirring of the water: a first water circuit comprising the biological filter and, if there is one, the urea filter, a second circuit comprising the mechanical-chemical filter, and a third circuit comprising the cooler. Each one of these circuits has independent water inlets and outlets, and in turn each water inlet and outlet can have one or several nozzles.

Other water treatment accessories can be a system for oxygenating the water, temperature sensors, etc. The recipient can also comprise a cover provided with slots for air to enter.

Taking into account that the purpose of the present invention is to transport shellfish, the power for operating the pump or pumps or the accessories can be obtained from a power source, for example from batteries, allowing it to be autonomous. It can also have means for being connected to an external power source, such as the electric system of the transport vehicle, or the electric grid of a storage area or a commercial establishment.

An optional feature which is very useful in the case of large live tanks is that the recipient comprises means for lifting a lower floor where the recipients in which the shellfish are placed are stacked. To aid in loading and unloading the shellfish, the shellfish are arranged in suitable containers (for example, cages), and these containers are stacked on the floor of the recipient. Then means (for example, a scissor mechanism operated by an endless worm and a crank or motor) can be arranged to lift this floor with the shellfish containers from the bottom of the of the recipient, where it would be during transport or storage, to the upper edge of the recipient, where the containers could be easily loaded or unloaded.

The filtering systems, water treatment accessories and other elements can be submergible and be inside of the recipient, in contact with the water. Another possibility is to arrange hermetically sealed compartments in which to place elements which should not be submerged.

Although the inventive step of the two embodiment examples is the same, only the first one is disclosed in the priority application, therefore priority is only claimed for this one.

### Description of the drawings

To complete the description and to aid in better understanding the features of the invention, a set of drawings is attached to the present specification as an integral part thereof, which with an illustrative and non-limiting character, show the following:
Figure 1 shows a sectioned profile view of the live tank of the invention according to a first embodiment.
Figure 2 shows a perspective view of the live tank of the invention according to a first embodiment.
Figure 3 shows a perspective view of the recipient of the live tank according to a second embodiment.
Figure 4 shows a sectioned perspective view of the live tank with its elements and shellfish containers according to the second embodiment.
Figure 5 shows a plan view of the live tank of the invention according to the second embodiment.
Figure 6 shows the water circulation flows of the live tank of the invention according to the second embodiment.
Figure 7 shows a sectioned profile view of the live tank of the invention according to the second embodiment.

### Preferred embodiment

As an example to better explain the invention, several embodiment examples are disclosed below, with the aid of the figures, which do not exhaust the features of the object of the invention.

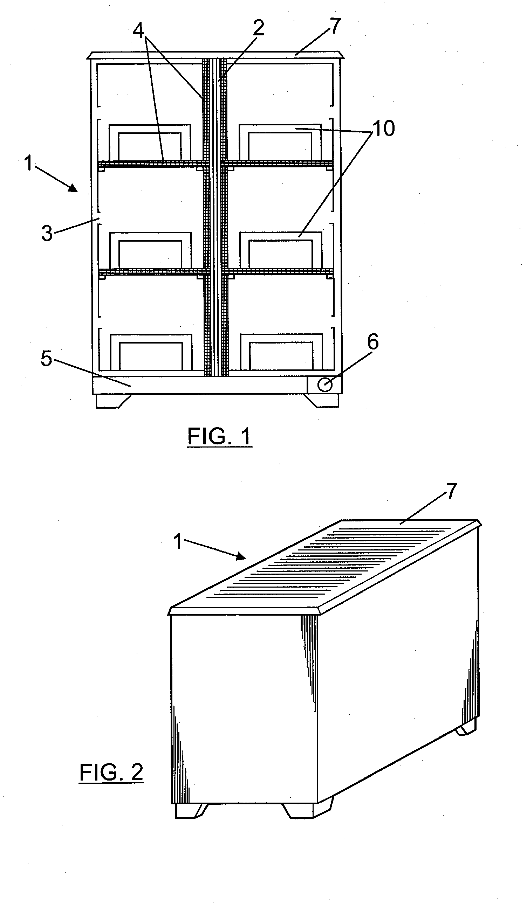

In a first embodiment example of the invention shown in figures 1 and 2, which corresponds to the embodiment example disclosed in the priority patent application, a live tank or live well (1 ) is disclosed which is provided with a plurality of conduits (2) and water outlet nozzles (3). There are also filters (4) which, in this embodiment, are arranged horizontally and vertically, through which filters the water passes for its filtering. In this first embodiment, the filters also act as a support of the containers (10) containing the shellfish to be transported.

The water is pumped by a pump (6) first pushing it through a deposit (5) where the removed residue is kept (therefore, other filtering systems like or unlike the filters (4), and other accessories, will preferably be included in this deposit). After the water passes through the filtering deposit (5) it is distributed throughout the live tank by the conduits (2) and is projected by the nozzles (3), creating turbulences and stirring to favor a better filtering in all areas of the live tank.

Another element shown in figure 2 is a cover (7), which allows air to enter inside but the water cannot flow out.

Although they are not shown in the figures, this live tank can comprise other filters or accessories such as a thermoheater, etc., preferably arranged in the area of the deposit (5). The live tank can be powered by a fixed electric grid, by the electric system of the vehicle transporting it or a battery can be incorporated in the live tank, making it autonomous.

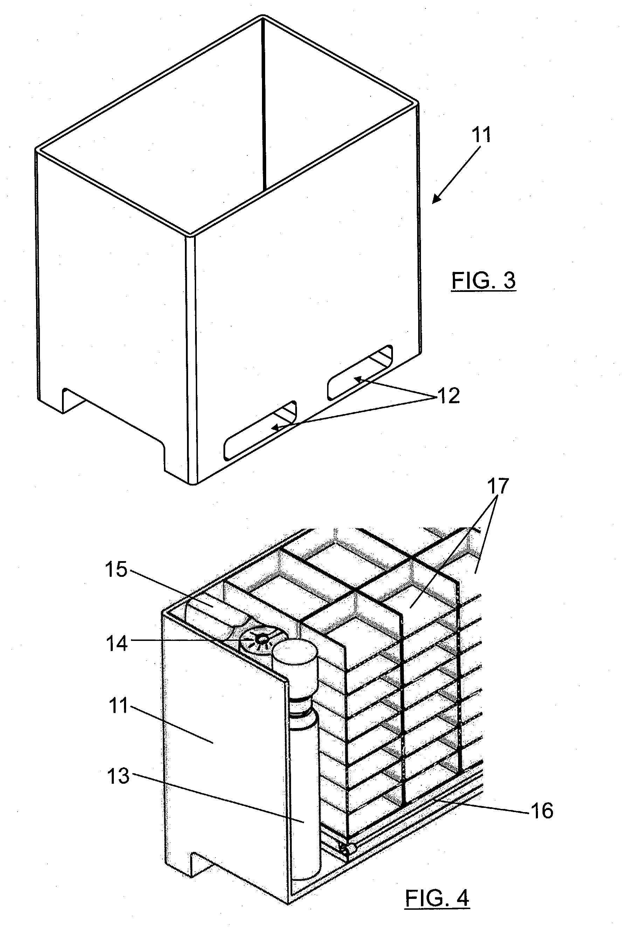

Figure 3 shows a recipient suitable for the second embodiment example of the invention, where the open shapes (12) can be seen on its upper part for introducing the forks of a hand pallet fork. All the elements of the live tank are placed inside of this recipient to form a compact assembly.

Figure 4 shows a perspective view of this recipient, where a it is sectioned close to the front wall to show the elements arranged on the inside thereof.

The filtering system, in this specific case consisting of a urea filter (13) (optional), a biological filter (14) and a mechanical-chemical filter (15), can be seen grouped inside of the recipient. Other water treatment accessories can also be assembled close to the filtering system. The filters and accessories are of the type available on the market.

A lifting mechanism (16) of the floor, which will be discussed below, and the containers (17) where the shellfish are kept for their transport, can be seen.

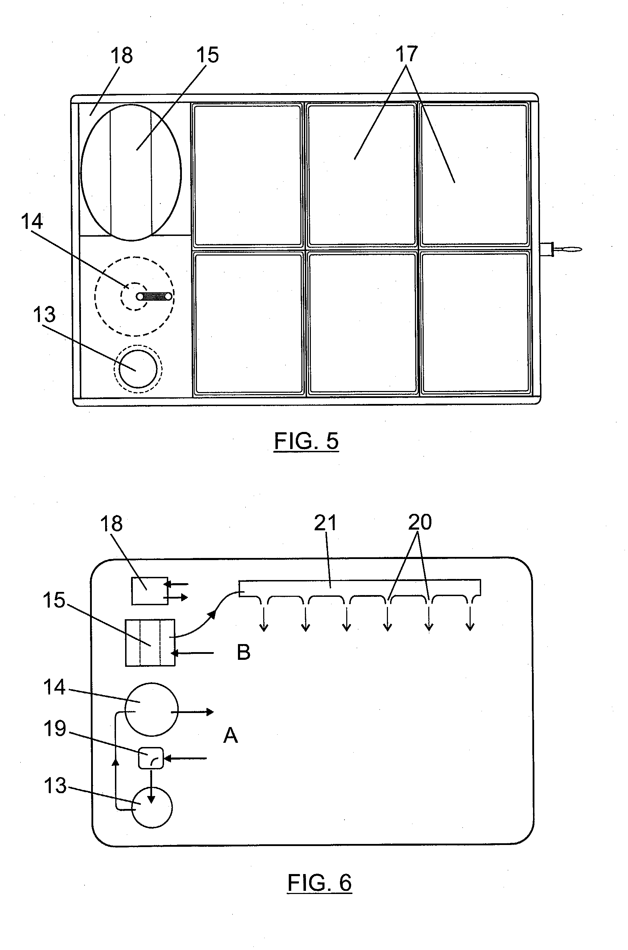

Figure 5 shows a plan view of the recipient with the elements disclosed, although here a water treatment accessory, a cooler (18), is indicated, which would be arranged below the mechanical-chemical filter (15).

Figure 6 shows the current flows which in this can have been divided into three parallel circuits A, B and C, in order to increase the turbulence and stirring of the water.

The first current circuit A begins in the aspiration of an independent pump (19) which pumps water to the urea filter (13). Then, the water passes through the biological filter (14) and returns to the water of the recipient. In an assembly where there is no urea filter, it would only pass through the biological filter.

The second current circuit B only passes through the mechanical-chemical filter (15), which has its own pump, and is returned to the water of the recipient.

Circuit C corresponds to the cooler (18) arranged below the mechanical-chemical filter (15). The fact that the water inlet and outlet nozzles of the circuits are at a different height favors the mixing and stirring of the water.

Each one of these circuits has at least two nozzles (20) for the inlet and outlet of water. However, to increase turbulences and to improve the mixing of the water, a conduit (21) has been arranged from the outlet of the mechanical-chemical filter (15), with a plurality of nozzles (20) which improve the stirring of the water.

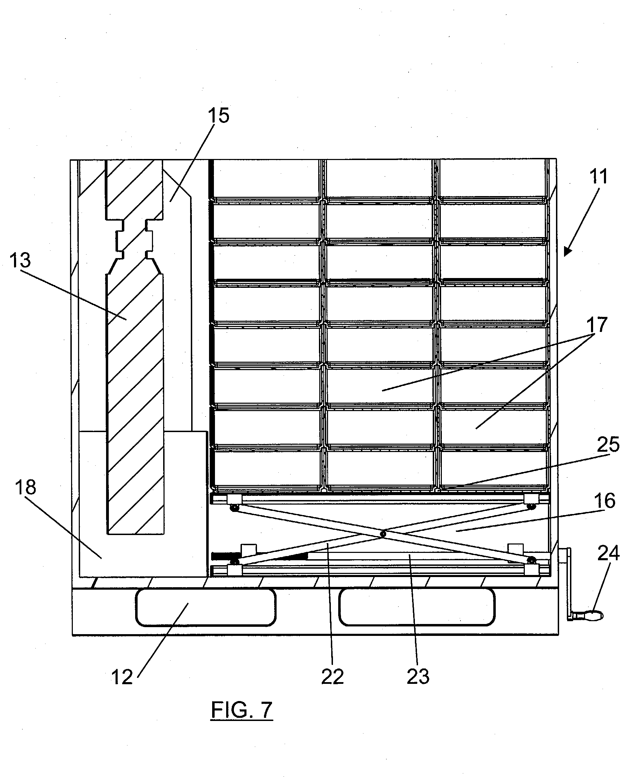

Figure 7 shows a sectioned profile view of the live tank of this second embodiment example. The filtering and cooling systems (13, 15 and 18) can be seen, as well as the holes (12) for introducing the forks of a hand pallet fork and the shellfish containers (17) stacked on a floor (25). This floor is coupled to lifting means (16). The lifting means comprise a scissor mechanism (22) with an endless screw (23) system operated by a crank (24).

Other elements not shown in the figures could be included in the live tank, as long as they do not jeopardize its compactness for transporting or the stirring of the water. Particularly, although they are not shown in the figures, the live tank could include an electric battery, a connection for the 12/24 V system of a truck and another connection for connecting to the 220 V electric grid.

## Claims

1. A live tank for transporting shellfish, comprising a shellfish recipient which can be filled with water, a filtering system, at least one water circulation pump and water circulation conduits, formed for pumping the water between the inside of the recipient and the filtering system, **characterized in that** the circulation conduits comprise a plurality of water inlet and outlet nozzles (4, 21) distributed through the inside of the recipient for causing turbulences favoring the stirring of the water, and **in that** all the elements composing the live tank are arranged in a compact unit.

2. A live tank for transporting shellfish according to claim 1, **characterized in that** the filtering system comprises a plurality of filters (4) arranged vertically and horizontally inside of the water recipient, such that the filters (4) constitute supports for arranging containers (10) containing live shellfish, and **in that** it also comprises a deposit (5) arranged on the lower part of the water recipient, where the particles removed from the water are deposited.

3. A live tank for transporting shellfish according to claim 1, **characterized in that** at least two water circuits of the filtering system or circuits of other water treatment accessories are connected in parallel with the water recipient.

4. A live tank for transporting shellfish according to any of the preceding claims, **characterized in that** the filtering system comprises a biological filter (14) and a mechanical-chemical filter (15).

5. A live tank for transporting shellfish according to any of the preceding claims, **characterized in that** the filtering system comprises a urea filter (13).

6. A live tank for transporting shellfish according to any of the preceding claims, **characterized in that** it comprises a water cooler (18).

7. A live tank for transporting shellfish according to claims 4 and 6 depending on claim 3, **characterized in that** a first parallel water circuit (A) comprises the biological filter (14), a second parallel water circuit (B) comprises the mechanical-chemical filter (15) and a third parallel circuit (B) comprises the cooler (18).

8. A live tank for transporting shellfish according to claims 4, 5 and 6 depending on claim 3, **characterized in that** a first parallel water circuit (A) comprises the urea filter (13) and the biological filter (14) arranged in series, a second parallel circuit (B) comprises the mechanical-chemical filter (15) and a third parallel circuit (C) comprises the cooler (18).

9. A live tank for transporting shellfish according to any of the preceding claims, **characterized in that** it comprises incorporated power storage means allowing it to be autonomous.

10. A live tank for transporting shellfish according to any of the preceding claims, **characterized in that** it has means for being connected to an external power source.

11. A live tank for transporting shellfish according to any of the preceding claims, **characterized in that** the recipient comprises lifting means (16) of an inner floor (25) where containers (17) in which the shellfish are kept are stacked, being able to lift this floor with the shellfish containers from the bottom of the recipient to the upper edge of the recipient.
